# EUROPÄISCHE PATENTSCHRIFT

(11) **EP 3 730 325 B1**
(45) Veröffentlichungstag und Bekanntmachung des Hinweises auf die Patenterteilung: **07.04.2021**
(21) Anmeldenummer: 20020046.7
(22) Anmeldetag: 29.01.2020
(51) Int. Cl.: B60J 1/20, B60J 5/04, E06B 9/52

(54) **INSEKTENSCHUTZVORRICHTUNG FÜR EINE ZUGANGSÖFFNUNG**
INSECT PROTECTION DEVICE FOR AN ACCESS OPENING
DISPOSITIF DE PROTECTION CONTRE LES INSECTES POUR UNE OUVERTURE D'ENTRÉE

(30) Priorität: 25.04.2019 DE 202019001811 U
(43) Veröffentlichungstag der Anmeldung: 28.10.2020
(73) Patentinhaber: Mayr, Gerhard, 86551 Aichach (DE)
(72) Erfinder: Mayr, Gerhard, 86551 Aichach (DE)
(74) Vertreter: Patentanwälte Munk

(56) Entgegenhaltungen:
- AU-A1- 2016 262 747
- KR-Y1- 200 470 811
- US-A- 5 597 028

## Beschreibung

Die Erfindung betrifft eine Insektenschutzvorrichtung für eine offenstehende, mittels einer Türe verschließbare Zugangsöffnung zu einem Aufenthaltsraum mit einem Abdecknetz, mittels dessen die Zugangsöffnung abdeckbar ist und das mit seinem Rand im Bereich des Rands der Zugangsöffnung lösbar festlegbar ist und wenigstens eine vertikale Unterteilung aufweist, die mittels einer zugeordneten, einen Reißverschluss enthaltenden Schließeinrichtung wahlweise überbrückbar ist.

Eine Insektenschutzvorrichtung dieser Art für eine Fahrzeugöffnung ist beispielsweise aus der DE 20 2016 004 396 U1 oder der US 5 597 028 A bekannt. Bei dieser bekannten Anordnung besteht die der Unterteilung des Abdecknetzes zugeordnete Schließeinrichtung nur aus einem Reißverschluss. Ein Abdecknetz mit einer derart ausgebildeten Schließeinrichtung ist zwar bei geschlossenem Reißverschluss konturstabil und daher gut montierbar. Andererseits ist es aber erforderlich, den Reißverschluss jedes Mal zu betätigen, wenn eine Person die Zugangsöffnung passieren will oder ein Gegenstand durch die Zugangsöffnung durchgereicht werden soll. Dies erweist sich als umständlich. Die bekannte Anordnung ist daher nicht benutzerfreundlich genug.

Hiervon ausgehend ist es daher die Aufgabe der vorliegenden Erfindung, eine Insektenschutzvorrichtung gattungsgemäßer Art so zu verbessern, dass eine hohe Benutzerfreundlichkeit erreicht wird und dennoch eine hohe Zuverlässigkeit und gute Montierbarkeit gewährleistet sind.

Diese Aufgabe wird erfindungsgemäß dadurch gelöst, dass die der Unterteilung des Abdecknetzes zugeordnete Schließeinrichtung zwei in Zugangsrichtung hintereinander angeordnete, voneinander unabhängige Verschlüsse aufweist, wobei neben dem der Innenseite des Aufenthaltsraums zugewandten Reißverschluss ein der Außenseite des Aufenthaltsraums zugewandter Magnetverschluss vorgesehen ist, der zwei jeweils entlang eines Rands der Unterteilung angeordnete Magnetleisten mit jeweils einander anziehenden Magneten aufweist.

Diese Maßnahmen ergeben einen Doppelverschluss mit einem inneren Reißverschluss und einem davon unabhängigen, äußeren Magnetverschluss. Zum Montieren des Abdecknetzes kann der Reißverschluss, der eine formschlüssige Verbindung ergibt, geschlossen sein, so dass die Kontur des Abdecknetzes stabil bleibt und dieses daher mit seinem Rand zuverlässig am Randbereich der Zugangsöffnung festgelegt werden kann, was eine zuverlässige Montage erleichtert. In Zeiten einer normalen Benutzung des Aufenthaltsraums, in denen die Zugangsöffnung häufig passiert wird, wobei die geöffnete Unterteilung des Abdecknetzes ein Schlupfloch bildet, kann der Reißverschluss des Doppelverschlusses offen bleiben, da der Magnetverschluss nach jeder Passage selbsttätig wieder in die Schließstellung fällt und einen insektendichten Verschluss ergibt. Da eine Betätigung des Reißverschlusses entfällt und der Magnetverschluss selbsttätig schließt, ergibt sich nicht nur ein hoher Benutzungskomfort, sondern wird gleichzeitig auch ein zuverlässiger Schutz gegen eine Insekteninvasion gewährleistet. Da zum Öffnen des Magnetverschlusses lediglich die magnetische Anziehung der einander gegenüberliegenden Magnete überwunden werden muss, und der Magnetverschluss anschließend in Folge der magnetischen Anziehung selbsttätig wieder schließt, wird nicht nur ein schnelles Durchschlüpfen erleichtert, sondern auch ein schnelles Durchreichen von Sachen. Da der eine formschlüssige Verbindung der die Unterteilung des Abdecknetzes begrenzenden Flügel bildende Reißverschluss innen liegt, ist in vorteilhafter Weise auch eine bequeme Sicherung der der Unterteilung zugeordneten Schließeinrichtung möglich. Mit den erfindungsgemäßen Maßnahmen werden daher die Nachteile der bekannten Anordnungen vermieden und ihre Vorteile beibehalten.

Vorteilhafte Ausgestaltungen und zweckmäßige Fortbildungen der übergeordneten Maßnahmen sind in den Unteransprüchen angegeben.

So kann jede Magnetleiste zweckmäßig durch mit Abstand hintereinander angeordnete Kästchen gebildet sein, in die jeweils wenigstens ein Magnetelement eingelegt ist. Dies stellt sicher, dass die Magnetleisten über ihrer Länge in sich beweglich sind und gewährleistet gleichzeitig eine definierte Position der Magnetelemente und damit eine hohe Funktionssicherheit des Magnetverschlusses.

Vorteilhaft können die Kästchen der Magnetleisten über ihrer Länge jeweils mehrere, vorzugsweise drei aneinander anschließende Kammern aufweisen, von denen wahlweise eine, mehrere oder alle mit jeweils einem Magnetelement bestückt werden können. Dies ermöglicht in vorteilhafter Weise eine Variation der magnetischen Anziehungskräfte und damit eine einfache Anpassung an die Verhältnisse des Einzelfalls.

In weiterer Fortbildung der vorstehenden Maßnahmen können die Kästchen der Magnetleisten einseitig offen und mit ihrer offenen Seite auf einem Trägerband befestigt sein, das am zugeordneten Randbereich der Unterbrechung festlegbar ist. Über die offene Seite der Kästchen können die zugeordneten Magnetelemente in diese eingelegt werden. Durch die Anbringung am Trägerband bildet dieses einen zuverlässigen Verschluss der Kästchen, wodurch die hierin aufgenommenen Magnetelemente zuverlässig fixiert sind. Insgesamt wird hierdurch die Herstellung der Magnetleisten sehr vereinfacht.

Dieser Vorteil wird dadurch noch verstärkt, dass die Kästchen als vorzugsweise aus PP bestehende Kunststoffformlinge ausgebildet sind, die durch eine Schweißverbindung am ebenfalls aus Kunststoff, vorzugsweise PP, bestehenden Trägerband befestigt werden können. Die mögliche Verschweißung der Kästchen mit dem Trägerband ergibt eine sehr rationelle Herstellung. Die Rückseite der Schweißverbindung wird dabei in vorteilhafter Weise durch die gegenüberliegende Leiste des Reißverschlusses abgedeckt, so dass auch keine optische Störung zu befürchten ist.

In weiterer Fortbildung der übergeordneten Maßnahmen kann das Abdecknetz mit jedem Randbereich einer Unterteilung zwischen das Trägerband einer Magnetleiste und das Trägerband einer Seite des Reißverschlusses eingreifen und hiermit vorzugsweise durch eine Naht verbunden sein. Dies ergibt eine sehr kompakte Anordnung und hohe Festigkeit.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnungen näher entnehmbar.

In der nachstehend beschriebenen Zeichnung zeigen:
- Figur 1: eine schematische Ansicht eines Vans mit heckseitiger Zugangsöffnung und dieser zugeordneter Insektenschutzvorrichtung,
- Figur 2: einen Horizontalschnitt durch die der Unterteilung des Abdecknetzes der Anordnung gemäß Figur 1 zugeordnete Schließeinrichtung,
- Figur 3: eine Draufsicht auf einen Längsabschnitt des Magnetverschlusses gemäß Figur 2 und
- Figur 4: ein Element eines Magnetbands der der Figur 3 zugrundeliegenden Anordnung in vergrößerter Explosionsdarstellung.

Hauptanwendungsgebiet der Erfindung sind für Campingzwecke etc. geeignete Fahrzeuge mit einem als Aufenthaltsraum für Personen geeigneten Innenraum, der über wenigstens eine Zugangsöffnung zugänglich ist, der eine Türe zugeordnet sein kann.

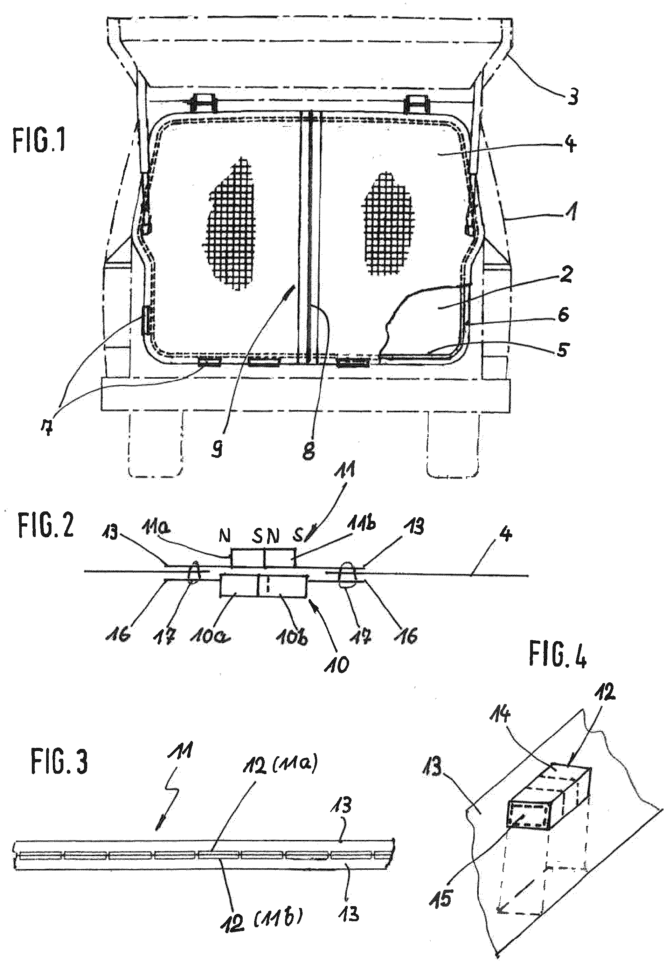

Das der Figur 1 zugrundeliegende Fahrzeug 1 besitzt eine als Zugangsöffnung zu seinem Innenraum dienende, heckseitige Fahrzeugöffnung 2, der eine hier als Heckklappe ausgebildete Türe 3 zugeordnet ist. Um bei geöffneter Türe 3 eine Invasion von Insekten in den Fahrzeuginnenraum zu verhindern, ist der Fahrzeugöffnung 2 eine Insektenschutzvorrichtung zugeordnet, die ein die Fahrzeugöffnung 2 abdeckendes, als Zuschnitt eines Moskitonetzes mit einer der Form der Fahrzeugöffnung ähnlichen, hiergegen um einen umlaufenden Randstreifen vergrößerten Form hergestelltes Abdecknetz 4 enthält, das mit seinem umlaufenden Randbereich am die Fahrzeugöffnung 2 begrenzenden Randbereich der Fahrzeugkarosserie festlegbar ist.

Das Abdecknetz 4 liegt zweckmäßig mit leichter Spannung von außen an einer um die Fahrzeugöffnung 2 umlaufenden Dichtung 5 an und greift mit seinem über die Dichtung 5 hinausgehenden Rand in einen der Dichtung benachbarten Falz 6 der Fahrzeugkarosserie ein, wo es hieran festlegbar ist. Dies kann auf unterschiedliche Weise geschehen. Im dargestellten Beispiel ist das Abdecknetz 4 hierzu mit über seinen ganzen umlaufenden Rand verteilten streifenförmigen Magneten 7 versehen, von denen lediglich einige angedeutet sind und die an die aus Stahlblech bestehende Karosserie des Fahrzeugs angezogen werden, wodurch ein insektendichter Verschluss erreicht wird. Die Magnete 7 können auf unterschiedliche Weise am Rand des Abdecknetzes 4 angebracht sein, beispielsweise aufgeklebt, angeheftet, aufgeschweißt oder in einen Saum eingenäht sein etc.

Zur Bildung eines Schlupflochs und damit zur Ermöglichung einer einfachen Passage der Fahrzeugöffnung 2 bei angebrachtem Abdecknetz 4 ist dieses mit wenigstens einer vertikalen Unterteilung 8 versehen, so dass sich zwei ausschwenkbare Flügel ergeben, die mittels einer zugeordneten Schließeinrichtung 9 miteinander verbindbar sind, so dass das durch die Unterteilung 8 gebildete Schlupfloch geöffnet und geschlossen werden kann.

Die Schließeinrichtung 9 ist, wie aus Figur 2 entnehmbar ist, als Doppelschließeinrichtung ausgebildet, die zwei in Zugangsrichtung hintereinander angeordnete, voneinander unabhängige Verschlüsse in Form eines Reißverschlusses 10 und eines hiergegen lotrecht zur Ebene des Abdecknetzes 4 versetzten Magnetverschlusses 11 aufweist. Der Reißverschluss 10 ist auf der Innenseite, das heißt der der Fahrzeuginnenseite zugewandten Seite des Abdecknetzes 4, angeordnet. Der deckend zum Reißverschluss 10 angeordnete Magnetverschluss 11 befindet sich auf der Außenseite, das heißt der nach außen gewandten Seiten des Abdecknetzes 4. Der Reißverschluss 10 besteht aus zwei Hälften 10a, b, die in an sich bekannter Weise in und außer gegenseitigen Eingriff bringbar sind. Der Magnetverschluss 11 besteht aus zwei parallelen Magnetleisten 11a, b, die jeweils mit einander anziehenden Magnetelementen versehen sind. Diese sind so orientiert, dass sie mit unterschiedlichen Polen einander zugewandt sind, wie in Figur 2 durch die Symbole NSNS verdeutlicht ist.

Die Magnetleisten 11a, b des Magnetverschlusses 11 werden, wie aus Figur 3 erkennbar ist, durch mit Abstand hintereinander angeordnete Kästchen 12 gebildet, in die jeweils wenigstens ein Magnetelement eingelegt ist. Die Kästchen 12 können eine Länge von etwa 60 mm und eine Breite von etwa 5,1 mm und eine Höhe von etwa 3 mm aufweisen. Der Abstand zwischen zwei aufeinanderfolgenden Kästchen 12 kann etwa 5 mm betragen. Die Kästchen 12 sind im Ausgangszustand einseitig offen und werden mit Ihrer offenen Seite, wie in Figur 4 angedeutet ist, auf einem Trägerband 13 befestigt, das seinerseits am Randbereich eines durch die Unterbrechung 8 gebildeten Flügels des Abdecknetzes 4 befestigt wird. Das die Kästchen 12 aufnehmende Trägerband 13 bildet dementsprechend gleichzeitig auch einen Verschluss der offenen Seite der Kästchen 12, so dass die hierin eingelegten Magnetelemente zuverlässig gesichert sind. Die Kästchen 12 sind im dargestellten Beispiel, wie in Figur 4 angedeutet ist, über ihrer Länge in mehrere, hier drei aneinander anschließende Kammern 14 unterteilt, von denen wahlweise eine, mehrere oder alle mit jeweils einem in Figur 4 ebenfalls angedeuteten Magnetelement 15 bestückt sind. Durch die Wahl der Anzahl der vorgesehenen Magnetelemente 15 lässt sich die Höhe der magnetischen Anziehungskraft variieren.

Die Kästchen 12 bestehen zweckmäßig aus Kunststoff, vorzugsweise PP, und können einfach als Spritzgussformlinge hergestellt und bereits bei der Herstellung oder hinterher mit dem jeweils zugeordneten Magnetelement 15 bestückt werden. Danach wird die offene Seite der Kästchen 15 durch das Trägerband 13 verschlossen. Hierzu werden die Kästchen 14 mit ihrer offenen Seite, wie in Figur 4 angedeutet ist, auf das Trägerband 13 aufgesetzt und hieran befestigt. Das Trägerband 13 besteht zweckmäßig ebenfalls aus Kunststoff, vorzugsweise PP, so dass eine Verschweißung der Kästchen 12 mit dem Trägerband 13 möglich ist.

Die beiden Reißverschlusshälften 10a, b und die beiden Magnetleisten 11a, b werden jeweils am Rand eines zugeordneten, durch die Unterteilung 8 gebildeten Flügels des Abdecknetzes 4 befestigt. Hierzu werden die Trägerbänder 13 der Magnetleisten 11a, b sowie die entsprechenden Trägerbänder 16 der beiden Reißverschlusshälften 10a, b mit dem zugeordneten Flügelrand verbunden. Im dargestellten Beispiel greift hierzu der jeweilige Flügelrand, wie aus Figur 2 ersichtlich ist, zwischen das Trägerband 13 der zugeordneten Magnetleiste 10a, b und das Trägerband 16 der jeweils zugeordneten Reißverschlusshälfte 10a, b ein und ist hiermit fest verbunden, wie in Figur 2 durch eine Naht 17 angedeutet ist. Anstelle von Vernähen könnten natürlich auch andere Verbindungsmethoden, wie Verkleben etc. Verwendung finden. Durch die Naht 17 ergibt sich jedoch eine erwünschte Pressung zwischen den aufeinanderfolgenden Lagen und damit eine erwünschte Kompaktheit. Die Breite des die Kästchen 12 aufnehmenden Trägerbands 13 kann etwa 20 mm betragen. Die Breite des Trägerbands 16 der Reißverschlusshälften ist entsprechend angepasst, so dass ein ausreichend tiefer Eingriff des zugeordneten Flügelrands zwischen die einander gegenüberliegenden Trägerbänder 13 und 16 möglich ist.

Der Reißverschluss 10 samt seinen Trägerbändern 16 deckt den Magnetverschluss 11 und dementsprechend die Schweißstellen zwischen den Kästchen 12 und dem zugeordneten Trägerband 13 nach innen ab, so dass diese optisch nicht in Erscheinung treten und sich dementsprechend ein gutes Aussehen ergibt.

## Patentansprüche

1. Insektenschutzvorrichtung für eine offenstehende, mittels einer Türe (3) verschließbare Zugangsöffnung (2) zu einem Aufenthaltsraum mit einem Abdecknetz (4), mittels dessen die Zugangsöffnung (2) abdeckbar ist und das mit seinem Rand im Bereich des Rands der Zugangsöffnung (2) lösbar festlegbar ist und wenigstens eine vertikale Unterteilung (8) aufweist, die mittels einer zugeordneten, einen Reißverschluss (10) enthaltenden Schließeinrichtung (9) wahlweise überbrückbar ist, **dadurch gekennzeichnet, dass** die Schließeinrichtung (9) zwei in Zugangsrichtung hintereinander angeordnete, voneinander unabhängig betätigbare Verschlüsse aufweist, wobei neben dem der Innenseite des Abdecknetzes (4) zugeordneten Reißverschluss (10) ein der Außenseite des Abdecknetzes (4) zugeordneter Magnetverschluss (11) vorgesehen ist, der zwei jeweils entlang eines Rands der Unterteilung (8) angeordnete Magnetleisten (11a, b) mit jeweils einander anziehenden Magnetelementen (15) aufweist.

2. Insektenschutzvorrichtung nach Anspruch 1, **dadurch gekennzeichnet, dass** jede Magnetleiste (11a, b) durch mit Abstand hintereinander angeordnete Kästchen (12) gebildet ist, in die jeweils wenigstens ein Magnetelement (15) eingelegt ist.

3. Insektenschutzvorrichtung nach Anspruch 2, **dadurch gekennzeichnet, dass** die Kästchen (12) der Magnetleisten (11a, b) über ihrer Länge jeweils mehrere aneinander anschließende Kammern (14) aufweisen, von denen wahlweise eine, mehrere oder alle mit jeweils einem Magnetelement (15) bestückt sind.

4. Insektenschutzvorrichtung nach Anspruch 3, **dadurch gekennzeichnet, dass** die Kästchen (12) über ihrer Länge drei hintereinander angeordnete Kammern (14) aufweisen.

5. Insektenschutzvorrichtung nach einem der vorhergehenden Ansprüche 3 oder 4, **dadurch gekennzeichnet, dass** die Kästchen (12) einseitig offen und mit ihrer offenen Seite an einem Trägerband (13) befestigt sind, das am zugeordneten Randbereich eines durch die Unterbrechung (8) gebildeten Flügels des Abdecknetzes (4) festlegbar ist.

6. Insektenschutzvorrichtung nach Anspruch 5, **dadurch gekennzeichnet, dass** die Kästchen (12) als vorzugsweise aus PP bestehende Kunststoffformlinge ausgebildet sind, die durch eine Schweißverbindung am ebenfalls aus Kunststoff, vorzugsweise PP bestehenden Trägerband (13) befestigt sind.

7. Insektenschutzvorrichtung nach einem der vorhergehenden Ansprüche 2-6, **dadurch gekennzeichnet, dass** das Abdecknetz (4) mit dem Rand jedes durch die Unterteilung (8) gebildeten Flügels zwischen ein einer Magnetleiste (10a, b) zugeordnetes Trägerband (13) und ein einer Reißverschlusshälfte (10a, b) zugeordnetes Trägerband (16) eingreift und hiermit verbunden ist.

8. Insektenschutzvorrichtung nach Anspruch (7) **dadurch gekennzeichnet, dass** das Abdecknetz (4) mit den Trägerbändern (13) und (16) durch eine Naht (17) verbunden ist.

9. Insektenschutzvorrichtung nach einem der vorhergehenden Ansprüche 2-8, **dadurch gekennzeichnet, dass** die Kästchen (12) eine Länge von 60 mm, Breite von 5,1 mm und Höhe von 3 mm aufweisen und dass die Breite des zugeordneten Trägerbands (13) 20 mm beträgt.

10. Insektenschutzvorrichtung nach einem der vorhergehenden Ansprüche 2-9, **dadurch gekennzeichnet, dass** der Abstand der aufeinanderfolgenden Kästchen (12) 5 mm beträgt.

## Claims

1. An insect protection device for an open access opening (2) leading to a common room, such access opening (2) being closable by a door (3), comprising a cover net (4) by which the access opening (2) is coverable and which is detachably fixed with its rim in the region of the rim of the access opening (2) and exhibits at least one vertical subdivision (8) which can optionally be bridged by an associated closing device (9) comprising a zipper (10), **characterized in that** the closing device (9) comprises two fasteners arranged one behind the other in access direction and actuatable independently from each other, with a magnetic fastener (11) being provided beside the zipper (10) associated with the inner side of the cover net (4) and associated with the outer side of the cover net (4) comprising two magnetic strips (11a, b) arranged along the rim of the subdivision (8) comprising two magnetic elements (15) attracting each other.

2. An insect protection device in accordance with claim 1, **characterized in that** each magnetic strip (11a, b) is formed by small boxes (12) arranged one behind the other at a certain distance in which at least one magnetic element (15) is placed.

3. An insect protection device in accordance with claim 2, **characterized in that** the small boxes (12) of the magnetic strips (11a, b) over their length comprise several adjoining chambers (14) of which alternatively one, several or all are fitted with a magnetic element (15) each.

4. An insect protection device in accordance with claim 3, **characterized in that** the small boxes (12) over their length comprise three chambers (14) arranged one behind the other.

5. An insect protection device in accordance with any of the preceding claims 3 or 4, **characterized in that** the small boxes (12) are open on one side and with their open side are attached on a carrier strip (13) which is attachable on an associated rim area of a section formed by the subdivision (8) of the cover net (4).

6. An insect protection device in accordance with claim 5, **characterized in that** the small boxes (12) are formed by plastics castings preferably consisting of PP which, by way of a welding connection, are attached to a carrier strip (13), likewise consisting of plastics, preferably of PP.

7. An insect protection device in accordance with any of the preceding claims 2 - 6, **characterized in that** the cover net (4) with the rim of each wing formed by the subdivision (8) engages between a carrier strip (13) associated with a magnetic strip (11a, b) and a carrier strip (16) associated with a zipper half (10a, b) and is connected therewith.

8. An insect protection device in accordance with claim 7, **characterized in that** the cover net (4) is connected with the carrier strips (13) and (16) by a seam (17).

9. An insect protection device in accordance with any of the preceding claims 2 - 8, **characterized in that** the small boxes (12) have a length of 60 mm, a width of 5,1 mm and a height of 3 mm and that the width of the associated carrier strip (13) is 20 mm.

10. An insect protection device in accordance with any of the preceding claims 2 - 9, **characterized in that** the distance of the subsequent small boxes (12) is 5 mm.

## Revendications

1. Dispositif de protection contre les insectes pour une ouverture d'accès (2) à un espace de vie, ouverte et apte à être fermée au moyen d'une porte (3), comprenant un filet de couverture (4) au moyen duquel l'ouverture d'accès (2) peut être couverte et lequel peut être fixé de manière amovible par son bord au niveau du bord de l'ouverture d'accès (2) et présente au moins une subdivision verticale (8) qui, au choix, peut être pontée au moyen d'un dispositif de fermeture (9) associé contenant une fermeture à glissière (10), **caractérisé par le fait que** ledit dispositif de fermeture (9) présente deux fermetures qui sont disposées l'une derrière l'autre dans la direction d'accès et peuvent être actionnées indépendamment l'une de l'autre, dans lequel une fermeture magnétique (11) associée à la face extérieure du filet de couverture (4) est prévue à côté de la fermeture à glissière (10) associée à la face intérieure du filet de couverture (4) et comprend deux barrettes magnétiques (11a, b) disposées chacune le long d'un bord de la subdivision (8) et comprenant chacune des éléments magnétiques (15) qui s'attirent.

2. Dispositif de protection contre les insectes selon la revendication 1, **caractérisé par le fait que** chaque barrette magnétique (11a, b) est formée par des cases (12) qui sont disposées à distance les unes derrière les autres et dans lesquelles est inséré respectivement au moins un élément magnétique (15).

3. Dispositif de protection contre les insectes selon la revendication 2, **caractérisé par le fait que** lesdites cases (12) des barrettes magnétiques (11a, b) présentent chacune, sur leur longueur, une pluralité de chambres (14) contiguës les unes aux autres dont, au choix, une, plusieurs ou toutes est/sont équipée(s) de respectivement un élément magnétique (15).

4. Dispositif de protection contre les insectes selon la revendication 3, **caractérisé par le fait que** les cases (12) présentent, sur leur longueur, trois chambres (14) disposées les unes derrière les autres.

5. Dispositif de protection contre les insectes selon l'une quelconque des revendications précédentes 3 ou 4, **caractérisé par le fait que** les cases (12) sont ouvertes sur un côté et sont fixées par leur côté ouvert sur une bande porteuse (13) qui peut être fixée sur la zone de bord associée d'un vantail du filet de couverture (4), qui est formé par la subdivision (8).

6. Dispositif de protection contre les insectes selon la revendication 5, **caractérisé par le fait que** les cases (12) sont conçues en tant que pièces moulées en matière plastique qui sont réalisées de préférence en PP et qui sont fixées par un joint soudé sur ladite bande porteuse (13) réalisée, elle aussi, en matière plastique, de préférence en PP.

7. Dispositif de protection contre les insectes selon l'une quelconque des revendications 2 à 6 précédentes, **caractérisé par le fait que** le filet de couverture (4) s'engage avec le bord de chaque vantail formé par la subdivision (8) entre une bande porteuse (13) associée à une barrette magnétique (11a, b) et une bande porteuse (16) associée à une moitié de fermeture à glissière (10a, b), et est relié à celles-ci.

8. Dispositif de protection contre les insectes selon la revendication (7), **caractérisé par le fait que** le filet de couverture (4) est relié par une couture (17) aux bandes porteuses (13) et (16).

9. Dispositif de protection contre les insectes selon l'une quelconque des revendications précédentes 2 à 8, **caractérisé par le fait que** les cases (12) présentent une longueur de 60 mm, une largeur de 5,1 mm et une hauteur de 3 mm et que la largeur de la bande porteuse (13) associée est de 20 mm.

10. Dispositif de protection contre les insectes selon l'une quelconque des revendications 2 à 9 précédentes, **caractérisé par le fait que** la distance séparant les cases (12) successives est de 5 mm.
